Europäisches Patentamt

European Patent Office

Office européen des brevets

(19)

(11) Numéro de publication: **0 267 095 B1**

# FASCICULE DE BREVET EUROPEEN

(12)

(45) Date de publication de fascicule du brevet:
18.09.91

(51) Int. Cl.⁵: **F16L 27/08**

(21) Numéro de dépôt: 87402339.3

(22) Date de dépôt: 20.10.87

(54) **Raccord tournant et étanche pour fluide sous pression.**

(30) Priorité: 22.10.86 FR 8614663

(43) Date de publication de la demande:
11.05.88 Bulletin 88/19

(45) Mention de la délivrance du brevet:
18.09.91 Bulletin 91/38

(84) Etats contractants désignés:
DE GB

(56) Documents cités:
DE-A- 2 207 644
US-A- 3 957 294
US-A- 4 561 681

(73) Titulaire: **SAT Société Anonyme de Télécom-munications**
**41, rue Cantagrel**
**F-75631 Paris Cedex 13(FR)**

(72) Inventeur: **Albagnac, René Denis Michel**
**18 rue du Colonel Oudot**
**F-75012 Paris(FR)**

(74) Mandataire: **Bloch, Gérard et al**
**2, square de l'Avenue du Bois**
**F-75116 Paris(FR)**

## Description

La présente invention a pour objet un raccord tournant et étanche pour fluide sous pression, pour raccorder un premier élément, en l'occurence une source de fluide sous pression, et un deuxième élément, en l'occurrence un appareillage d'utilisation dudit fluide, montés en rotation relative autour d'un axe, raccord comprenant :

- une première pièce, solidaire dudit premier élément, pourvue d'un évidement de communication avec celui-ci, et de réception d'un joint souple d'étanchéité,
- une deuxième pièce, creuse et de révolution, solidaire en rotation dudit deuxième élément, communiquant avec celui-ci et avec ledit évidement, et s'étendant à travers ladite première pièce par un passage ménageant un espace annulaire autour de ladite deuxième pièce,
- ledit joint étant pourvu d'au moins une partie annulaire empêchant l'écoulement dudit fluide sous pression à travers ledit espace annulaire.

Un tel raccord est utilisé en particulier pour l'alimentation, en fluide de toute nature, d'une plateforme tournante. Par exemple, une tourelle de détection infra-rouge, pourvue d'un système de refroidissement, pourra être alimentée en fluide gazeux, tel qu'azote ou argon, à partir d'un réservoir fixe grâce à un raccord du type précédent.

On connaît déjà un raccord du type ci-dessus, décrit dans le brevet US-A-4 561 681. Dans ce raccord, la largeur de l'espace annulaire entre la deuxième pièce et le passage ne peut être inférieure à une valeur limite dépendant en particulier de la qualité de l'accouplement mécanique permettant la rotation relative de la première et de la deuxième pièce. En effet, la deuxième pièce est animée d'un mouvement excentrique relativement à la première pièce, et le joint est realisé dans un matériau suffisamment souple et élastique pour s'accomoder de ce mouvement excentrique, et pour obtenir une bonne étanchéité sans usure rapide du joint et de la surface de la deuxième pièce en contact avec ce joint.

Dans ces conditions, il y a donc un risque d'extrusion du joint relativement souple dans l'espace annulaire lorsque la différence de pression de part et d'autre du joint est très élevée.

Pour éliminer ce risque, la demande française N° 2 538 875 prévoit, dans un racccord du type ci-dessus, une bague anti-extrusion relativement rigide.

La présence de la bague anti-extrusion, qui nécessite en particulier de prévoir des moyens de rappel de la partie annulaire du joint souple contre la seconde pièce, ainsi qu'un joint torique, complique cependant notablement le raccord, son montage et son fonctionnement.

La présente invention vise à pallier ces inconvénients en proposant un raccord qui ne nécessite pas de bague anti-extrusion, même pour des différences de pression très élevées de part et d'autre du joint.

A cet effet, elle a pour objet un raccord du type défini ci-dessus, raccord caractérisé par le fait que,

- ladite deuxième pièce est un tube cylindrique, rigide en rotation axiale et souple radialement, fixé audit deuxième élément à une distance dudit passage grande devant le diamètre dudit tube, pour présenter un degré de liberté radiale relativement audit deuxième élément, et,
- ledit joint joue un rôle de palier pour ladite deuxième pièce pour la maintenir avec un jeu pratiquement nul dans ledit passage, ledit espace annulaire ayant une valeur extrêmement réduite pour éviter tout risque d'extrusion dudit joint.

Dans le raccord de l'invention, comme il n'y a pas de jeu entre la deuxième pièce et le passage, l'espace annulaire peut être réduit au minimum compatible avec l'absence de contact entre la première et la deuxième pièce et le risque d'extrusion se trouve donc supprimé. Ainsi, afin d'éliminer les inconvénients liés à la nécessité d'une bague anti-extrusion, la demanderesse a eu l'idée de supprimer le problème que cette dernière permettait de résoudre, en réduisant notablement l'espace d'extrusion du joint.

Avantageusement, ledit joint comporte une partie en forme de manchon, adjacente à ladite partie annulaire, et disposée pour que la surface intérieure dudit manchon se trouve appliquée contre la surface extérieure de ladite deuxième pièce sous l'action de la différence de pression de part et d'autre dudit joint.

Ainsi, plus la pression du fluide est élevée, meilleure est l'étanchéité assurée par le joint.

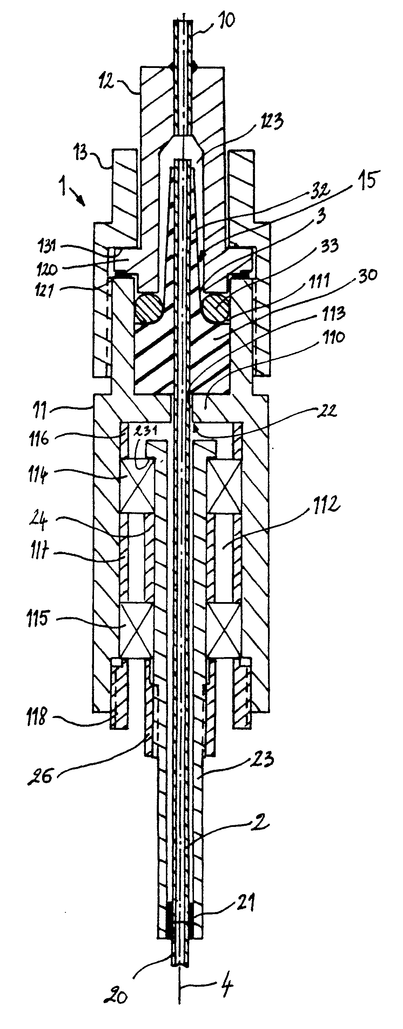

La présente invention sera mieux comprise à l'aide de la description suivante de la forme de réalisation préférée du raccord de l'invention, faite en se référant au dessin annexé, sur lequel l'unique figure représente une vue en coupe du raccord de l'invention.

Le raccord tournant représenté sur la figure permet ici la mise en communication d'une source de fluide, non représentée, avec un appareillage d'utilisation de ce fluide, non représenté également.

La source de fluide est ici un réservoir contenant de l'azote gazeux sous une pression valant sensiblement $4.10^7$ Pascal.

L'appareillage d'utilisation est un dispositif de refroidissement d'un système de détection infra-rouge.

Le réservoir est ici disposé sur un châssis fixe, non représenté, alors que le système de détection, et donc le dispositif de refroidissement qui lui est associé, sont montés sur une plate-forme tournante par rapport au châssis, et non représentée également. Un tel agencement permet le balayage, sur 360°, du volume dans lequel on doit détecter les rayonnements infra-rouge.

Sur la figure est représenté en 10, dans la partie supérieure, la tubulure de raccordement au réservoir, et en 20, dans la partie inférieure, la tubulure de raccordement au dispositif de refroidissement. L'axe de rotation de la plate-forme tournante, vertical sur la figure, est représenté en 4.

La tubulure 10 est solidaire du châssis fixe non représenté et elle est raccordée à une première pièce 1, également solidaire de ce châssis auquel elle est fixée par des moyens conventionnels non représentés.

La première pièce 1, ici à symétrie de révolution, comprend un corps 11 et un couvercle 12 assemblés à l'aide d'une bague de serrage 13.

Le corps 11 présente la forme générale d'un cylindre circulaire creux d'axe 4, dont le volume intérieur est divisé par une cloison 110 s'étendant le long d'un plan de section droite, définissant ainsi un premier volume 111, supérieur sur la figure, et un deuxième volume 112, inférieur sur la figure, tous deux en forme de cylindre circulaire.

Dans la cloison 110 est ménagé un passage 113, en forme de cylindre circulaire d'axe 4, mettant en communication le premier volume 111 et le deuxième volume 112.

Le couvercle 12 présente la forme générale d'un cylindre creux d'axe 4, définissant un troisième volume 123, communiquant vers le haut avec la tubulure 10 et ouvert vers le bas. La partie inférieure, sur la figure, du couvercle 12, vient s'emboîter partiellement dans la partie supérieure du corps 11. Le couvercle 12 est pourvu d'un épaulement extérieur annulaire 120 qui vient en appui sur le bord supérieur du corps 11, dont il est séparé par un joint d'étanchéité annulaire 121 de type connu. La bague de serrage 13 présente un décrochement 131 venant en appui sur l'épaulement 120 et elle vient se visser sur la partie extérieure supérieure du corps 11, pour serrer l'un contre l'autre le corps 11 et le couvercle 12.

La tubulure 20 est solidaire du plateau tournant non représenté et elle est raccordée à une deuxième pièce, à symétrie de révolution autour de l'axe 4, en l'occurrence un tube 2, ici métallique, par une soudure 21. Le tube 2 se trouve donc solidaire en rotation autour de l'axe 4, de la plate-forme tournante. Le tube 2 s'étend le long de l'axe 4 à travers le corps 11, tout d'abord à l'intérieur du deuxième volume 112, puis par le passage 113 qui ménage autour de lui un espace annulaire 22, et enfin à l'intérieur du premier volume 111. Le tube 2 s'étend ici également à l'intérieur du troisième volume 123 du couvercle 12, où il débouche. Le tube 2 est par exemple en acier inoxydable traité en surface et poli, et son diamètre extérieur est ici de 0,9 mm.

Un joint d'étanchéité 3 souple ici en polytétrafluoroéthylène (P.T.F.E.) chargé au graphite, comprend une partie annulaire 30, inférieure sur la figure, surmontée d'un manchon cylindro-conique allongé 32, de même diamètre intérieur prévu pour s'adapter, de façon étanche, autour de la partie du tube 2 s'étendant à l'intérieur du premier volume 111 et du troisième volume 123. Un joint torique 33 est interposé entre la partie inférieure du couvercle 12 et la partie annulaire 30 du joint 3, qui se trouve ainsi serrée contre la cloison 110 lorsque la bague 13 est vissée sur le corps 11. Dans cet état, la partie annulaire 30 est prévue pour avoir un diamètre extérieur s'adaptant exactement au diamètre du premier volume 111.

Ainsi, lorsque le corps 11 et le couvercle 12 sont assemblés à l'aide de la bague de serrage 13, on peut dire que le corps 11 est pourvu d'un évidement 15, englobant ici le premier volume 111 et le troisième volume 123, qui communique avec la tubulure 10 par l'intermédiaire du couvercle 12 et avec la tubulure 20 par l'intermédiaire du tube 2. L'évidement 15 reçoit également le joint d'étanchéité 3.

La paroi intérieure du corps 11 qui délimite le deuxième volume 112 est ici utilisée pour supporter deux roulements à billes 114 et 115, maintenus en place à l'aide d'un agencement connu d'entretoise 116 et 117 et d'une bague de serrage 118.

Les roulements 114 et 115 permettent la rotation, autour de l'axe 4, d'un arbre creux 23, auxquels ils sont fixés, de façon connue, grâce à une bague de serrage 26 coopérant avec une entretoise 24 et un épaulement 231 de l'arbre creux 23.

L'arbre creux 23 est traversé par le tube 2 auquel il se trouve fixé par la soudure 21. L'arbre creux 23 est solidaire de la plate-forme tournante auquel il est fixé par des moyens conventionnels non représentés. La soudure 21 se trouve réalisée à l'extérieur du volume 112, et en tous cas à une distance du passage 113 grande devant le diamètre du tube 2, c'est-à-dire au moins égale à sensiblement cinq fois ce diamètre.

Le raccord qui vient d'être décrit fonctionne comme suit. Le fluide sous pression, en provenance de la source par la tubulure 10, remplit l'évidement 15 qui communique avec l'appareillage d'utilisation par le tube 2 et la tubulure 20. Le joint d'étanchéité 3 empêche l'écoulement dudit fluide à travers l'espace annulaire 22, et de manière d'autant plus efficace que la pression du fluide est élevée, car la différence de pression de part et d'autre du joint 3 applique la surface intérieure du manchon 32 contre la surface extérieure du tube 2, et la surface de base de la partie annulaire 30 contre la cloison 110 du corps 11.

Du fait que le tube 2 est ici réalisé dans un matériau rigide en rotation axiale, c'est-à-dire ne se déformant pas sous l'action d'une torsion autour de l'axe 4 du tube 2, mais souple radialement, c'est-à-dire ici relativement élastique lorsqu'on lui applique une force perpendiculaire à l'axe 4, et du fait que la soudure 21 qui fixe le tube 2 sur l'arbre creux 23, donc sur la plate-forme tournante, est à une distance du passage 113 grande devant le diamètre du tube, on peut dire que le tube 2 est monté sur la plate-forme tournante avec un degré de liberté radiale. En d'autres termes, le tube 2 peut flamber à l'intérieur de l'arbre creux 23, par rapport à la plate-forme tournante.

Ainsi, au niveau du passage 113, le tube 2 serait libre radialement s'il n'était pas maintenu en place par le joint 3 qui joue donc un rôle de palier pour lui. En conséquence, le jeu du tube 2 dans le passage 113 est pratiquement nul et l'espace annulaire 22 peut avoir une valeur extrêmement réduite, évitant ainsi tout risque d'extrusion du joint d'étanchéité 3, même, comme cela est le cas, lorsque ce joint est choisi souple afin d'éviter une usure prématurée.

Il est à noter que le joint torique 33 sert essentiellement à maintenir mécaniquement le joint 3, et en particulier à assurer ainsi le centrage du tube 2 dans le passage 113. Le rôle du joint torique 33 vis-à-vis de l'étanchéité est secondaire, celle-ci étant assurée d'une part par le joint fixe plat 121 et d'autre part par la pression du fluide elle-même, qui, compte tenu de la forme particulière du joint 3, comprenant la partie annulaire 30 et le manchon 32, applique le joint 3 contre le tube 2 et contre la cloison 110, comme cela a été expliqué.

On pourrait également permuter les raccordements de la source et de l'appareillage.

**Revendications**

1. Raccord tournant et étanche pour fluide sous pression, pour raccorder un premier élément, en l'occurence une source de fluide sous pression, et un deuxième élément, en l'occurrence un appareillage d'utilisation dudit fluide, montés en rotation relative autour d'un axe, raccord comprenant :
   - une première pièce (1), solidaire dudit premier élément, pourvue d'un évidement (15) de communication avec celui-ci, et de réception d'un joint souple d'étanchéité (3),
   - une deuxième pièce (2), creuse et de révolution, solidaire en rotation dudit deuxième élément, communiquant avec celui-ci et avec ledit évidement (15), et s'étendant à travers ladite première pièce (1) par un passage (113) ménageant un espace annulaire (22) autour de ladite deuxième pièce (2),
   - ledit joint (3) étant pourvu d'au moins une partie annulaire (30) empêchant l'écoulement dudit fluide sous pression à travers ledit espace annulaire (22),
   raccord caractérisé par le fait que,
   - ladite deuxième pièce est un tube cylindrique (2), rigide en rotation axiale et souple radialement, fixé audit deuxième élément à une distance dudit passage (113) grande devant le diamètre dudit tube (2), pour présenter un degré de liberté radiale relativement audit deuxième élément, et,
   - ledit joint (3) joue un rôle de palier pour ladite deuxième pièce (2) pour la maintenir avec un jeu pratiquement nul dans ledit passage (113), ledit espace annulaire (22) ayant une valeur extrêmement réduite pour éviter tout risque d'extrusion dudit joint (3).

2. Raccord selon la revendication 1, dans lequel ledit joint (3) comporte une partie en forme de manchon (32), adjacente à ladite partie annulaire (30), et disposée pour que la surface intérieure dudit manchon (32) se trouve appliquée contre la surface extérieure de ladite deuxième pièce (2) sous l'action de la différence de pression de part et d'autre dudit joint (3).

3. Raccord selon l'une des revendications 1 ou 2 dans lequel ledit joint (3) est en polytétrafluoroéthylène chargé en graphite.

4. Raccord selon l'une des revendications 1 à 3, dans lequel il est prévu des moyens mécaniques (11, 12, 13, 33) pour serrer ladite partie annulaire (30) dudit joint d'étanchéité (3) contre une cloison (110) de la dite première pièce (1) dans laquelle est ménagé ledit passage (113), et assurer le centrage dudit tube (2) dans ledit passage (113).

**Claims**

1. Rotary sealed connection for pressurized fluid, for connecting a first element, namely a pressurized fluid source, and a second element, namely an apparatus using said fluid, mounted for relative rotation about a shaft, connection comprising :

- a first part (1), fast with the first element, provided with a recess (15) for communicating therewith and for receiving a flexible seal (3),
- a second part (2), hollow and of revolution, fast in rotation with said second element, communicating therewith and with said recess (15) and extending through said first part (1) through a passage (113) forming an annular space (22) about said second part (2),
- said seal (3) comprising at least one annular part (30) preventing flow of said pressurized fluid through said annular space (22),
- said second part is a cylindrical tube (2), rigid in axial rotation and radially flexible, fixed to said second element at a distance from said passage (113) which is large with respect to the diameter of said tube (2), for presenting a degree of radial freedom with respect to said second element, and
- said seal (3) serves as a bearing for said second part (2) for holding it with a clearance practically nul in said passage (113), said annular space (22) having a value extremely reduced for preventing any risk of extrusion of said seal (3).

2. Connection as claimed in claim 1, wherein said seal (3) comprises a portion in the form of a sleeve (32) adjacent said annular portion (30) and disposed so that the inner surface of said sleeve (32) is applied against the outer surface of said second part (2) under the action of a pressure difference across said seal (3).

3. Connection as claimed in one of claims 1 or 2, wherein said seal (3) is made from polytetrafluoroethylene charged with graphite.

4. Connection as claimed in one of claims 1 to 3, wherein mechanical means (11,12,13,33) are provided for clamping said annular portion (30) of said seal (3) against a dividing wall (110) of said first part (1) in which said passage (113) is formed, and for ensuring centering of said tube (2) in said passage (113).

**Patentansprüche**

1. Dichtende Drehkupplung für Hochdruckmedium zur Verbindung eines ersten Elementes, im vorliegenden Fall einer Hochdruckmedium-Quelle, mit einem zweiten Element, im vorliegenden Fall einer Verbrauchseinrichtung für das genannte Medium, welche um eine Achse drehbar montiert sind, Kupplung bestehend aus:

- einem ersten Teil (1), das mit dem genannten Element verbunden ist und welches mit einer Ausnehmung (15) zur Verbindung mit diesem und zur Aufnahme einer weichen Dichtung (3) versehen ist,
- einem zweiten, hohlen Drehteil (2), welches mit dem genannten zweiten Element drehfest verbunden ist, mit diesem und mit der genannten Ausnehmung (15) in Verbindung steh und sich durch das genannte erste Teil (1) hindurch durch eine Öffnung (113) erstreckt, die einen Ringraum (22) um das genannte zweite Teil (2) herum freiläßt,
- wobei die genannte Dichtung (3) mit mindestens einem ringförmigen Teil (30) versehen ist, welcher das Fließen des genannten Hochdruckmediums durch den genannten Ringraum (22) verhindert, Kupplung dadurch gekennzeichnet, daß
- das genannte zweite Teil ein zylindrisches Rohr (2) ist, welches bei Axialdrehung steif und radial weich ist und an dem genannten zweiten Element in einer im Verhältnis zum Durchmesser des genannten Rohres (2) großen Entfernung von der genannten Öffnung (113) befestigt ist, um einen radialen Beweglichkeitsgrad in Bezug auf das zweite Element aufzuweisen, und
- die genannte Dichtung (3) ein Lager für das genannte zweite Teil (2) darstellt, um dieses praktisch spielfrei in der genannten Öffnung (113) zu halten, wobei der genannte Ringraum (22) extrem klein ist, um jegliches Ausstoßrisiko für die genannte Dichtung (3) zu vermeiden.

2. Kupplung gemäß Anspruch 1, bei welcher die genannte Dichtung (3) einen an den genannten ringförmigen Teil (30) anliegenden muffenförmigen Teil (32) aufweist, der so angeordnet ist, daß die Innenfläche der genannten Muffe (32) unter der Einwirkung des Druckunterschiedes zu beiden Seiten der genannten Dichtung (3) gegen die Außenfläche des genannten zweiten Teiles (2) gepreßt wird.

3. Kupplung gemäß einem der Ansprüche 1 oder 2, bei welcher die genannte Dichtung (3) aus graphithaltigem Polytetrafluoräthylen besteht.

4. Kupplung gemäß einem der Ansprüche 1 bis 3, bei welcher mechanische Mittel (11, 12, 13, 33) vorgesehen sind, um den genannten ringförmigen Teil (30) der genannten Dichtung (3) gegen eine Wand (110) des genannten ersten Teiles (1) zu pressen, in welchen die genannte Öffnung (113) eingebracht ist, und um die Zentrierung des genannten Rohres (2) in der genannten Öffnung (113) zu gewährleisten.